(19) Europäisches Patentamt
European Patent Office
Office européen des brevets

(11) **EP 3 018 261 B1**

(12) **FASCICULE DE BREVET EUROPEEN**

(45) Date de publication et mention de la délivrance du brevet:
**16.08.2017 Bulletin 2017/33**

(51) Int Cl.:
**E04B 1/80** *(2006.01)*   **F16L 59/065** *(2006.01)*
**F25D 23/06** *(2006.01)*

(21) Numéro de dépôt: **15192684.7**

(22) Date de dépôt: **03.11.2015**

(54) **PANNEAU PIV AVEC ONDULATIONS EN SURFACE, ÉLÉMENT DE PAROI ET ENCEINTE D'ISOLATION THERMIQUE INCLUANT UN TEL PANNEAU**

VAKUUM-ISOLATIONS-PANEEL (VIP) MIT WELLEN AN DER OBERFLÄCHE, WANDELEMENT UND WÄRMEDÄMMWAND, DIE EIN SOLCHES PANEEL ENTHÄLT

VIP PANEL WITH SURFACE CORRUGATIONS, WALL ELEMENT AND THERMAL INSULATION ENCLOSURE INCLUDING SUCH A PANEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2014 FR 1460621**

(43) Date de publication de la demande:
**11.05.2016 Bulletin 2016/19**

(73) Titulaire: **Electricité de France**
**75008 Paris (FR)**

(72) Inventeurs:
• **Yrieix, Bernard**
**77250 Moret sur Loing (FR)**
• **Pons, Emmanuelle**
**77210 Avon (FR)**

(74) Mandataire: **Cabinet Plasseraud**
**66, rue de la Chaussée d'Antin**
**75440 Paris Cedex 09 (FR)**

(56) Documents cités:
**EP-A1- 1 275 894    WO-A1-91/19867**
**FR-A1- 3 002 256    US-A- 5 271 980**
**US-A- 5 858 501**

**EP 3 018 261 B1**

**Description**

La présente invention concerne des éléments d'isolation thermique qui comportent un coeur poreux et une enveloppe barrière. L'invention se rapporte plus particulièrement aux paneaux élémentaires isolants, de préférence de type PIV (Panneau Isolant sous Vide) et à un procédé de fabrication associé. L'invention concerne également un élément de paroi d'isolation thermique pour bâtiment et une enceinte comportant de tels panneaux.

Lorsque l'on souhaite obtenir des performances élevées d'isolation d'une paroi, l'utilisation de panneaux PIV est recommandée.

Pour rappel, les panneaux élémentaires de type PIV comprennent un matériau de coeur poreux isolant (par exemple à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable typiquement multicouches polymère / métal, utilisant le plus souvent l'aluminium. Ces panneaux forment généralement des plaques d'épaisseur sensiblement constante et présentent de grandes tailles, par exemple 600 mm de largeur et 1200 mm de longueur (d'autres largeurs, par exemple de 300, 400, 500 jusqu'à 1200 mm étant bien entendu disponibles, la longueur variant généralement entre 500 et 2000 mm). La taille de ces panneaux convient donc pour le recouvrement de parois de bâtiments à des fins d'isolation thermique. De plus, la performance thermique de ces panneaux élémentaires conduit à des épaisseurs qui peuvent être réduites pour minimiser l'encombrement du système d'isolation thermique, l'épaisseur d'un panneau pouvant être inférieure à 60 mm, et de préférence inférieure à 35 mm.

Dans le domaine, on qualifie de super isolants thermiques des matériaux présentant, à température ambiante, un niveau de conductivité thermique inférieure à 0,025 W m$^{-1}$ K$^{-1}$. Les panneaux PIV ont une conductivité thermique (initiale) inférieure à 0,007 W m$^{-1}$ K$^{-1}$, et plus préférentiellement inférieure à 0,005 W m$^{-1}$ K$^{-1}$.

Dans les panneaux élémentaires de type PIV, tous les gaz présents sont évacués du matériau poreux avant un conditionnement sous vide au sein d'une enveloppe barrière souple dont l'un des principaux types est constituée (de façon connue en soi) d'un film thermo-soudable multicouches polymère / métal, utilisant l'aluminium métallisé comme barrière qui permet en outre d'éviter la formation de ponts thermiques au niveau des bords du panneau.

L'utilisation de tels panneaux élémentaires pour réaliser une installation d'isolation thermique est délicate du fait que l'enveloppe barrière (très mince) est fragile. Ce type de panneau est sensible aux efforts de compression ou de flexion qui sont susceptibles d'allonger localement l'enveloppe et de dégrader ses propriétés de barrière aux gaz. De ce fait, l'utilisation de panneaux de type PIV a été limitée.

Comme remarqué dans le document US 5 858 501, l'enveloppe barrière est sollicitée dès le stade de la fabrication du fait du rétrécissement du coeur en matériau poreux. Il en résulte un aspect de surface froissé, avec de longues lignes de pli ou des creusements étendus (visible sur la figure 4 du document US 5 858 501).

Il est connu par ce document, d'améliorer l'aspect esthétique des panneaux PIV. Le panneau présente un quadrillage de surface, avec un pas pouvant être de l'ordre de 6 cm, qui résulte de rainures formées directement dans le matériau poreux, en l'occurrence un matériau polymère à structure de mousse (avec porosité ouverte). En pratique, ces rainures permettent de reprendre une partie du film en excès formant l'enveloppe barrière, afin de limiter l'apparition de rides essentiellement au niveau des soudures qui sont très dommageables à la durabilité. Si on considère les deux faces principales du panneau PIV, on observe cependant toujours de courtes rides qui apparaissent sur sensiblement toute la surface courante.

En pratique, les inventeurs ont observé, d'une part des fragilités au niveau des intersections des rainures, qui forment des zones anguleuses (avec quatre sommets), et d'autre part des risques de rupture microscopique de la couche métallisée barrière dus aux contraintes de cisaillement imposées par le rétrécissement du coeur formé par le matériau poreux (avec retrait significatif dans le sens de la longueur et de la largeur), sous l'effet de la pression atmosphérique. Tout ceci a des conséquences défavorables sur la longévité du panneau PIV (avec une haute performance d'isolation non maintenue).

Le document US 5 271 980 A décrit un panneau qui présente une structure multicouche. Le panneau est souple, ce qui implique de pouvoir compresser le matériau de coeur. Les couches à effet barrière sont initialement ondulées et c'est cette conformation ondulée qui agit comme un moule rigide pour l'élément souple d'isolation sous vide qui définit la couche centrale. Contrairement à cela, dans les panneaux PIV, la conformation du matériau de coeur (qui est rigide) est figée, de sorte que les panneaux PIV sont rigides à cause du matériau de coeur contenu à l'intérieur de l'enveloppe barrière.

La présente invention a notamment pour but de pallier tout ou partie des inconvénients précités.

A cet effet, il est proposé selon l'invention un panneau thermo-isolant de type PIV, comprenant :

- un matériau poreux résistant à la compression, qui définit deux faces principales opposées et dont la plus petite dimension est une épaisseur maximale entre ces deux faces ; et
- une enveloppe barrière étanche aux gaz (plus souple que le matériau poreux) permettant de maintenir un vide intérieur et qui renferme le matériau poreux, l'enveloppe étant réalisée à partir d'au moins un film ou feuillet souple/déformable et présentant :

- une première portion qui recouvre une première des deux faces principales, et
- une deuxième portion qui recouvre une deuxième des deux faces principales,

- une première surface de support pourvue d'un relief, sous-jacente à la première portion de l'enveloppe barrière ;

avec la particularité que la première surface de support présente des ondulations en formant des bossages vers l'extérieur, chacun à sommet arrondi, l'enveloppe barrière définissant la couche externe du panneau mise sous pression atmosphérique, la première portion de l'enveloppe barrière s'étendant le long de la première surface de support et étant déformée pour se conformer selon ledit relief avec des projections à sommet arrondi en correspondance avec les bossages.

Grâce à ces dispositions, le matériau (typiquement un film) de l'enveloppe barrière est guidé en flexion par les bossages, ce qui permet de réduire significativement le risque de micro rupture/dégradation par cisaillement, qui est particulièrement important sur les plus grandes faces. L'enveloppe externe du panneau de type PIV reste parfaitement intègre lors de la mise sous pression atmosphérique.

Concrètement quand la pression est augmentée autour de l'enveloppe vers la fin de conception du panneau PIV, la première portion de l'enveloppe est d'abord en contact avec les sommets arrondis avant de continuer de s'appliquer (sous l'effet de la pression exercée du côté externe). Les bossages forment en effet les parties proximales de la première surface de support qui sont donc les premières à s'engager contre la face interne de la première portion. Le déploiement de cette première portion, sous l'effet de la pression, est réalisé en direction du fond des parties distales qui forment des cavités (zones concaves entre les bossages). La courbure convexe des bossages permet de guider en flexion la première portion, ce qui limite le risque de frotter et étirer excessivement la matière de l'enveloppe barrière contre des zones du relief. En pratique, le rayon de courbure reste important et il n'y a pas de zone de pliage significative (pas a fortiori de pliage avec un angle proche de 90°).

On comprend que les panneaux isolants PIV présentent une enveloppe barrière qui épouse la surface sous-jacente par un remplissage de cavités sans délimitations anguleuses ou brutales. En outre, les rides tendent à être éliminées au moins au niveau des zones de courbure qui s'étendent entre les points culminants (sommets des bossages) et les points bas (fond des cavités).

Le panneau PIV peut être utilisé dans de nombreuses applications et peut présenter, le cas échéant, une courbure globale pour s'adapter à des contraintes de géométrie.

Selon une particularité, la première surface de support présente, en complément des bossages, des séries de cavités, deux cavités adjacentes d'une même série se rejoignant par une zone de jonction ayant une courbure convexe dans au moins une direction qui permet de réduire progressivement la profondeur de chacune des cavités depuis une zone centrale qui correspond à un maximum de profondeur de la cavité considérée. Ainsi, on forme des zones de col entre les cavités en évitant de former des arêtes ou angles qui favorisent des effets de cisaillement.

Selon une autre particularité, la première portion de l'enveloppe barrière définit au moins trois niveaux de surface, avec:

- des creux d'une profondeur déterminée qui coïncident avec des cavités de la première surface de support, qui définissent le niveau inférieur des trois niveaux ;
- les projections, adjacentes aux creux et séparant deux séries de creux, qui définissent le niveau supérieur des trois niveaux ; et
- des cols moins profonds que les creux, séparant deux des projections, et définissant un niveau intermédiaire des trois niveaux (on comprend que ces cols coïncident chacun avec une des zones de jonction).

Dans divers modes de réalisation du panneau selon l'invention, on peut éventuellement avoir recours en outre à l'une et/ou à l'autre des dispositions suivantes :

- les projections affleurent au niveau d'un même plan tangent (plan virtuel).
- la première surface de support définit une surface apparente (typiquement parallèle au plan tangent) telle que perçue en deux dimensions sans prendre en compte le relief et une surface développée qui prend en compte le relief, sachant que la surface développée est supérieure d'au moins 2% à la surface apparente, et de préférence supérieure d'un pourcentage compris entre 3 et 6% par rapport à la surface apparente.
- la différence entre le niveau supérieur et le niveau inférieur est comprise entre 0,3 et 2 mm et est inférieure à la distance d'espacement entre les sommets respectifs de deux projections adjacentes.
- les deux faces principales sont préférentiellement parallèles et chacune des séries de cavités s'étend selon une même direction générale, de sorte qu'on obtient une configuration en quinconce des bossages et une configuration en quinconce pour les cavités.
- chacune des cavités présente un centre correspondant à un maximum local de profondeur, la première surface de support vérifiant la relation suivante :

$$2 \leq \lambda/h \leq 15$$

h représentant une amplitude maximale du relief mesurée perpendiculairement aux deux faces principales et exprimée en millimètres, et

λ représente un écartement entre deux centres de cavités adjacentes séparées par un bossage (de sorte que cet écartement peut correspondre à une longueur d'onde lorsque l'alternance entre les bossages et les cavités définit une sinusoïde), cet écartement qui peut être constant étant exprimé en millimètres, mesuré suivant une direction qui est perpendiculaire à la direction utilisée pour mesurer l'amplitude h (ce ratio étant inférieur à 15 et de préférence inférieur ou égal à 10, il est représentatif du maillage resserré formé par les séries de cavités sachant que l'amplitude h est typiquement inférieure à 2 mm ; un tel ratio permet également d'éviter de former des rayons de courbure trop réduits).

- la première surface de support s'étend entre deux extrémités opposées du panneau, les bossages étant distribués de façon à ce que le relief s'étende entre lesdites deux extrémités opposées du panneau.

- les bossages sont distribués selon des rangées, suivant une direction déterminée, la première surface de support ayant suivant cette direction déterminée une forme sinusoïdale avec une alternance de tronçons courbes convexes et de tronçons courbes concaves (cette configuration est optimale pour éliminer le risque de microfissures).

- soit la première surface de support est définie par l'une au moins des deux faces principales du matériau poreux, soit elle est définie par une couche intermédiaire distincte du matériau poreux et plus mince que le matériau poreux.

- lorsqu'une couche intermédiaire est prévue, on peut prévoir que celle-ci est une couche perforée ou poreuse qui résiste à la compression et présente intrinsèquement les bossages ou que cette couche perforée ou poreuse est souple avec le relief sur la première surface de support qui résulte de l'empreinte formée sur la face principale sous-jacente du corps poreux résistant à la compression.

- la première surface de support présente des ondulations dans deux directions transverses l'une par rapport à l'autre ; avec cette disposition, chacun des bossages appartient à et forme une intersection de deux rangs de bossages.

- le panneau comporte une deuxième surface de support pourvue d'un relief, sous-jacente à la deuxième portion de l'enveloppe barrière.

- chacune des première et deuxième surfaces de support est dépourvue de surfaces planes, le panneau ayant un format parallélépipédique, de préférence à section rectangulaire.

- l'amplitude maximale du relief est inférieure à 3 mm (ce qui rend plus difficile la formation de replis).

Il est également proposé un procédé de fabrication d'un panneau thermo-isolant de type PIV, utilisant une plaque du matériau poreux résistant à la compression et comprenant les étapes consistant essentiellement à :

- former une première surface de support avec un relief, par transcription d'un relief avec ondulations présent sur une plaque ou un rouleau, de sorte que la première surface de support présente des bossages vers l'extérieur, chacun à sommet arrondi, la première surface de support étant choisie parmi une surface d'une face principale de la plaque de matériau poreux et une surface principale d'une couche intermédiaire distincte du matériau poreux ;

- pendant une mise sous vide postérieure à la formation du relief, envelopper la plaque de matériau poreux et recouvrir la première surface de support, directement ou indirectement, par une enveloppe barrière étanche aux gaz permettant de maintenir un vide intérieur ; et

- soumettre à une pression atmosphérique l'extérieur de l'enveloppe, ce grâce à quoi une portion de l'enveloppe barrière s'étend le long de la première surface de support et se conforme selon un relief avec ondulations résultant d'un contact avec le relief pour former une face principale du panneau pourvue de projections.

Le procédé permet avantageusement de former des panneaux PIV sans surcoût significatif. Il est permis d'utiliser un produit conventionnel pour le film ou feuillet(s) de l'enveloppe barrière et le matériau poreux formant le coeur est peu modifié. Il peut consister en de la silice compressée avec l'empreinte adaptée pour former le relief ou il peut rester inchangé (dans ce dernier cas, une couche intermédiaire est utilisée).

Bien entendu, l'expression « sommet arrondi » n'exclut pas la présence d'une face supérieure sensiblement plane aux dimensions très réduites (aux dimensions réduites par rapport à l'étendue du bossage, par exemple, et de manière non limitative, moins de 1 mm$^2$ de surface pour la face supérieure d'un bossage ayant un périmètre de base supérieur à 4 mm), sachant que cela n'a pas pour effet de créer une zone de pliage significative pour l'enveloppe. On comprend que l'arrondi du sommet permet de supprimer les arêtes vives dans la zone supérieure du bossage (en limitant ou supprimant les angles), avec un profil courbe du bossage depuis sa base jusqu'à une zone de jonction typiquement tangentielle avec la face supérieure. L'arrondi est donc similaire à ce qui est perçu pour une colline (et non comparable au relief topographique d'un plateau bordé par une falaise ou pan raide).

Il est également proposé un élément de paroi thermiquement isolant pour bâtiment, qui intègre une pluralité de panneaux selon l'invention collés ou bien fixées au moyen d'une ossature rigide dans au moins une couche d'isolation thermique. Un tel élément peut avantageusement présenter un encombrement plus faible si l'on compare avec des composants conventionnels qui n'ont pas une performance d'isolation thermique aussi bonne.

Afin d'optimiser le volume intérieur dans des équipements électriques (appareils ménagers ou similaires), il est aussi proposé une enceinte, par exemple pour appareil électrique ou pour véhicule frigorifique, pourvue de moyens de rafraîchissement ou de chauffage, destinée à isoler thermiquement un volume intérieur, comprenant une paroi de fond, une paroi latérale et une paroi supérieure, l'enceinte comportant au moins un panneau selon l'invention formant partie de l'une parmi la paroi de fond, la paroi latérale et la paroi supérieure.

D'autres caractéristiques et avantages de l'invention apparaîtront au cours de la description suivante de plusieurs de ses modes de réalisation, donnés à titre d'exemples non limitatifs, en regard des dessins joints dans lesquels :

- la figure 1 est une vue de face montrant une forme de réalisation d'un panneau de type PIV conçu selon un premier mode de réalisation de l'invention, avec le matériau poreux du coeur qui apparaît du fait d'une découpe en bas à gauche ;
- la figure 2A est une vue schématique illustrant le relief formé sur la première surface de support, avec des bossages à sommet arrondi définissant les points culminants et des cavités définissant les points bas
- la figure 2B est une vue schématique illustrant un type de relief similaire à celui de la figure 2A, formé sur la première surface de support, avec des bossages à sommet arrondi définissant les faces culminantes et des cavités définissant les points bas ;
- les figures 3A et 3B sont des vues de détail en coupe longitudinale, qui montrent le positionnement relatif d'une première portion de l'enveloppe barrière par rapport à la première surface de support, respectivement avant et après mise sous pression du côté externe du panneau ;
- la figure 4 illustre en perspective un relief utilisé dans une forme de réalisation préférée de l'invention, avec une structure de surface sinusoïdale selon les deux directions perpendiculaires (typiquement longueur et largeur) du panneau PIV ;
- la figure 5 est une vue en coupe d'un équipement pouvant être utilisé pour former par compression le matériau poreux formant le coeur du panneau de la figure 1, avec des ondulations en surface ;
- la figure 6 est une vue en coupe montrant un panneau PIV conçu selon un deuxième mode de réalisation de l'invention ;
- la figure 7 est un schéma montrant en coupe un réfrigérateur incluant une enceinte délimitée par des panneaux PIV conformes à l'invention ;
- la figure 8 montre une vue en coupe verticale d'une forme de réalisation d'un système de doublage de paroi utilisant des panneaux de la figure 1.

Sur les différentes figures, les mêmes références désignent des éléments identiques ou similaires. Les dimensions dans le sens de l'épaisseur ont été volontairement exagérées dans certaines figures afin d'améliorer la visibilité des différentes couches et/ou du relief.

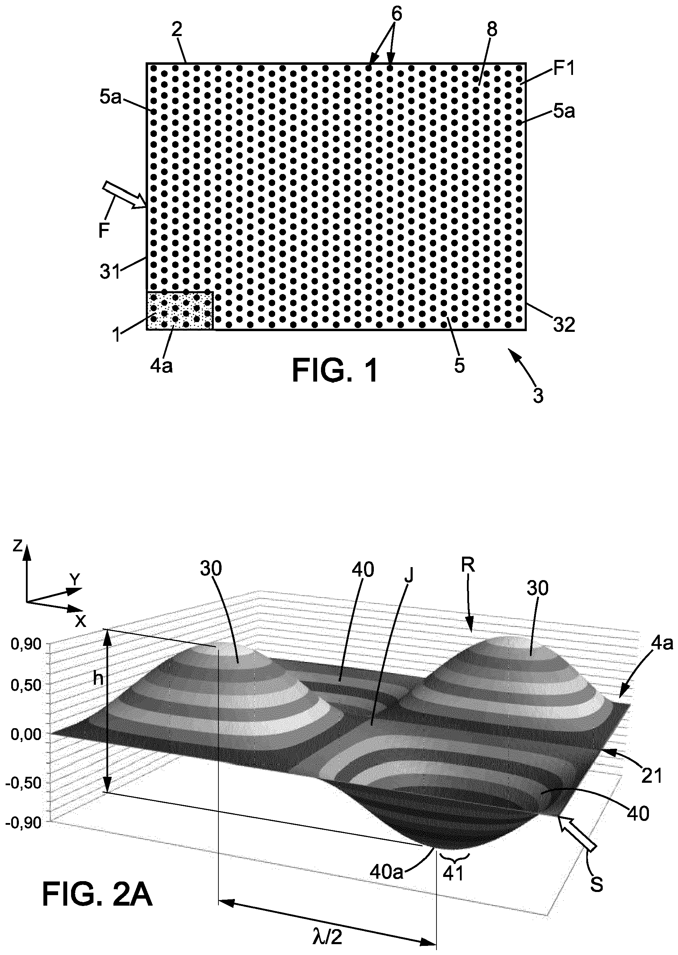

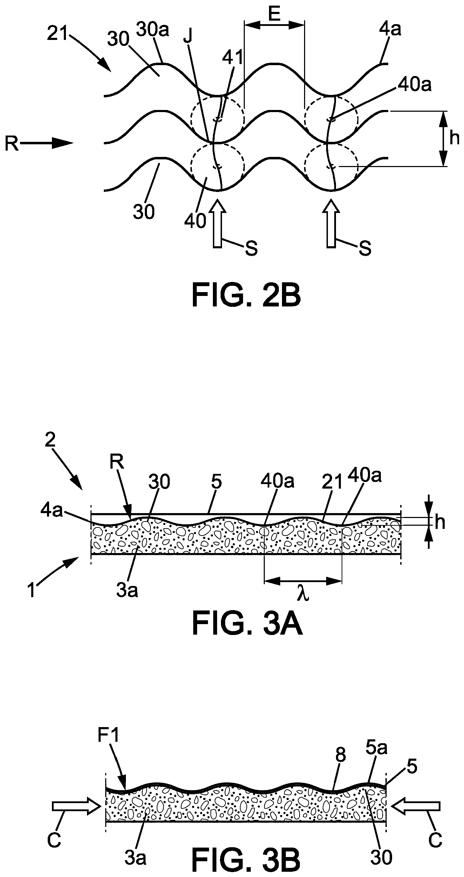

Comme illustré sur les figures 1 et 3A-3B, l'âme isolante 1, poreuse, du panneau 3 est mise sous vide et enfermée dans l'enveloppe barrière 2 qui est de préférence souple. L'enveloppe 2, étanche, a un effet barrière aux gaz et permet ainsi de maintenir le vide dans un volume intérieur. L'enveloppe est réalisée à partir d'au moins un film ou feuillet souple. Bien entendu, le panneau 3 est ici prévu sans protection mécanique, l'enveloppe barrière 2 définissant la couche externe du panneau 3. L'âme isolante 1 comprend un matériau poreux 3a résistant à la compression dont le volume peut correspondre au volume de l'enveloppe barrière 2.

Lorsque l'enveloppe barrière 2 comprend deux portions sous forme de mince pellicule, celles-ci peuvent être soudées sur elles-mêmes ou pour le moins sur un matériau d'apport pouvant être déposé en couche mince. Chacune des deux portions 5, 7 peut comporter une ou plusieurs couche en polymère et une ou plusieurs couches haute barrière métallique ou minérale. Parmi les polymères utilisés, on peut citer les copolymères EVOH (éthylène vinyle alcool), le PVDC, le PET, le PP, tous métallisés ou combinés avec des feuillards d'aluminium. Dans ce dernier cas, les couches polymère de surface permettent la soudure thermique et les couches polymère à coeur assurent, avec typiquement les films aluminium, la parfaite étanchéité aux gaz.

De façon connue en soi, l'enveloppe barrière 2 est en contact intime avec deux grandes surfaces de support opposées, et peut aussi être en contact avec une surface latérale définie par les tranches du panneau 3 (par exemple quatre tranches lorsque l'âme isolante 1 présente un format parallélépipédique, de préférence à section rectangulaire). Cependant, il est prévu ici que l'une au moins des grandes surfaces de support 21, 21', 23 présente un relief R, de façon à ce que l'enveloppe barrière 2 présente des ondulations ou variations similaires.

Sur les figures 1 et 3B, on peut voir ainsi une face externe principale F1 du panneau 3 dont la surface est définie par une première portion 5 de l'enveloppe barrière 2 et présente des ondulations 6. La première portion 5 recouvre l'âme isolante 1 au moins dans la zone rectangulaire correspondant à l'une des faces principales 4a du matériau poreux 3a.

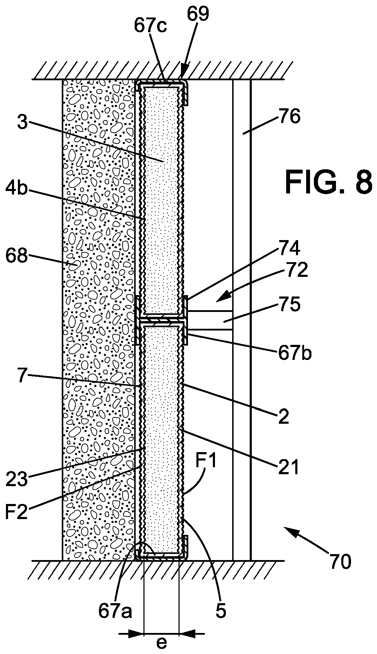

En référence aux figures 1 et 8, on comprend que le matériau poreux 3a définit deux faces principales opposées 4a et 4b, typiquement rectangulaires et a une épaisseur e plus petite. L'épaisseur e, ici la plus petite dimension, est définie comme une épaisseur maximale entre les deux faces 4a et 4b. L'épaisseur e du matériau poreux 3a peut être par exemple inférieure à 60 mm, de préférence inférieure ou égale à 35 mm. On comprend que le matériau poreux 3a définit de préférence au moins 90% de l'épaisseur totale du panneau 3 de type PIV, sachant que l'enveloppe barrière 2 est constituée d'un film étanche très mince dont l'épaisseur est très inférieure à 1 mm, et typiquement inférieure à 0,2 mm.

La nature exacte du matériau poreux 3a peut varier selon les besoins. Il sera bien compris que l'invention ne porte pas sur la constitution physico-chimique de l'âme isolante 1 et cible plutôt une géométrie qui évite l'apparition de microfissures dans les couches barrière de l'enveloppe 2, au moins sur la première face externe principale F1, et de préférence également sur la deuxième face externe principale F2 opposée (cf. figure 8). A titre d'exemple non limitatif, on peut citer un matériau poreux 3a à base de silice pyrogénée, aérogel de silice ou matériau pulvérulent aux propriétés isolantes analogues. De façon connue en soi, un tel matériau poreux 3a est rigide, de sorte que le panneau PIV n'est donc pas adapté pour épouser la conformation d'une couche externe. En revanche, il est permis de constituer par fabrication un format de matériau poreux avec des ondulations sur l'une au moins de ses faces principales 4a, 4b. Le cas échéant, le panneau 3 peut présenter une courbure globale qui ne s'oppose pas à la rigidité. L'écart par rapport à la planéité sur les faces principales 4a et 4b provient alors d'une conformation initiale du matériau poreux 3a, et pas de l'enveloppe barrière 2 qui est plus mince et souple.

Pour accroître la performance du panneau 3, un dessiccateur ou au moins un matériau d'adsorption et d'absorption (getter) peuvent être ajoutés à l'intérieur de l'âme isolante 1 pour absorber la vapeur d'eau et les gaz atmosphériques résiduels. Dans le cas d'un getter en surface, celui-ci peut avoir une texture qui forme tout ou partie du relief R.

L'aspect vallonné de la surface de l'enveloppe barrière 2, au moins dans des portions 5 et 7 recouvrant les faces principales 4a et 4b est illustré notamment dans les figures 3B, 4, 6 et 8.

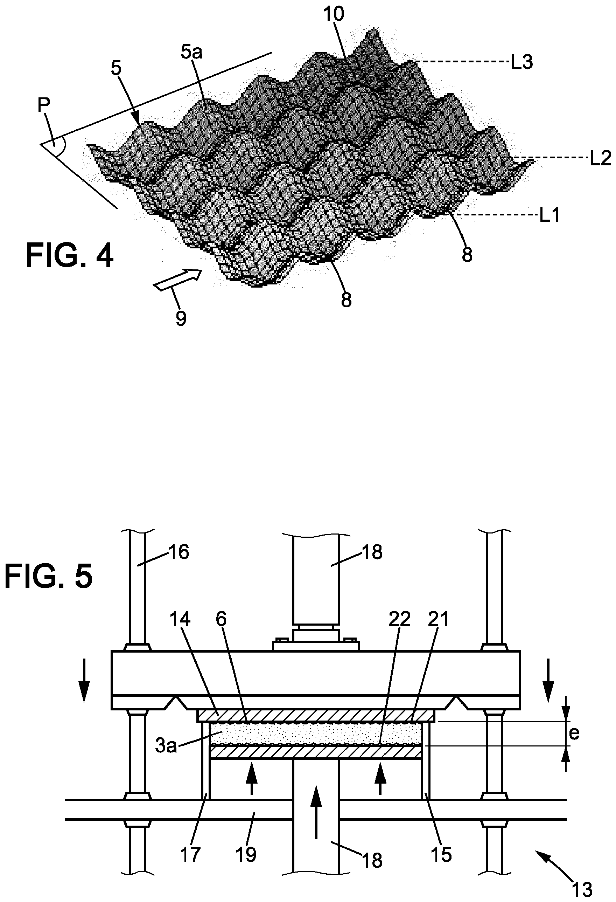

En référence aux figures 1, 3B, 4 et 6, la première portion 5 présente des projections 5a saillantes avec un sommet arrondi et des creux 8 qui s'étendent entre quatre des projections 5a. La flèche F sur la figure 1 indique une direction générale d'alignement des projections 5a. Selon cette même direction générale d'alignement, les creux 8 sont répartis en séries 9 parallèles, comme bien visible sur la figure 4. Les projections 5a, ici en forme de buttes complémentaires des creux 8 (vallons), ont chacune un sommet arrondi qui présente une convexité. Dans la forme de réalisation de la figure 4, cette convexité est telle que la partie culminante n'est pas plane.

Cependant, on comprend que la partie culminante n'est pas forcément ponctuelle et peut le cas échéant définir une face supérieure 30a (non ponctuelle) sensiblement plane. La périphérie de la projection 5a forme dans ce cas une surface latérale unique (en évitant de former des pans se rejoignant par des arêtes) et se connecte par une partie supérieure annulaire convexe à la face supérieure (avec un profil de connexion sensiblement tangentiel). Ainsi le contour de la face supérieure 30a ne forme pas une arête annulaire (pas d'arête saillante), comme illustré schématiquement sur la figure 2B.

Dans un mode de réalisation préféré, les projections 5a affleurent au niveau d'un même plan tangent P (plan virtuel). La figure 4 illustre un tel plan P. Le fait de conserver un même niveau L3 pour les sommets arrondis résulte de la formation des bossages 30. Comme représenté sur les figures 3A-3B, avoir un seul et même niveau pour le sommet arrondi des bossages 30 permet de s'assurer que le contact entre tous les bossages 30 et la portion 5 de l'enveloppe barrière 2 se fait simultanément. Il est préférable d'éviter la présence d'un bossage isolé qui serait plus saillant que les autres bossages 30. Dans des variantes avec un maillage serré des bossages, on peut cependant utiliser des bossages de différents niveaux, en répartissant de manière régulière les bossages de plus haut niveau pour minimiser la distance maximale entre deux tels bossages de plus haut niveau.

La première portion 5 de l'enveloppe barrière 2 peut définir plusieurs niveaux de surface en épousant le relief R d'une première surface de support 21, 21' (sous-jacente à la première portion 5). La figure 4 montre qu'au moins trois niveaux de surface L1, L2, L3 sont définis par la première portion 5, avec :

- les creux 8 d'une profondeur déterminée (ici identique), qui définissent le niveau inférieur L1 ;
- les projections 5a à sommet arrondi, adjacentes aux creux 8 et séparant deux séries 9, qui définissent le niveau supérieur L3 ; et
- des cols 10 moins profonds que les creux 8, séparant deux des projections 5a, et définissant un niveau intermédiaire L2.

On peut noter que le niveau L2 peut être ici le même pour tous les cols 10. Cependant, on peut aussi prévoir des différences de niveaux entre les cols 10, sachant que l'espacement latéral entre deux projections 5a peut optionnellement varier. La différence entre le niveau supérieur L3 et le niveau inférieur L1 peut être comprise entre 0,3 et 2 mm, et de préférence inférieure à la distance d'espacement entre les sommets respectifs de deux projections 5a adjacentes. Cela permet aux portions 5, 7 de recouvrir la surface de support correspondante 21, 21' et respectivement 23 avec une descente progressive vers les zones centrales 41 des cavités 40.

En référence aux figures 2A-2B, 3A et 4, le dénivelé maximal de la portion 5 correspond ici sensiblement à l'amplitude maximale h du relief R défini par la première surface de support 21 (visible figures 2A-2B). L'amplitude maximale h du relief R est mesurée perpendiculairement aux deux faces externes principales F1, F2 qui s'étendent parallèlement l'une à l'autre. On comprend que l'amplitude maximale h est ici typiquement inférieure ou égale à 2 mm pour limiter les flexions locales de l'enveloppe barrière 2.

Sur les figures 2A-2B, la première surface de support 21 est ici formée directement par la face principale 4a du matériau poreux 3a. La deuxième surface de support 4b, peut être formée de façon analogue par le matériau poreux 3a.

En référence aux figures 2A-2B, le relief R de la première surface de support 21 définit une surface développée supérieure à la surface apparente telle que perçue en deux dimensions (surface de même périmètre, sans prendre en compte le relief R). L'excédent de surface pour la surface développée peut représenter au moins 2% de la surface apparente. De préférence, ce surplus représente un pourcentage compris entre 3 et 6% de la surface apparente (surface virtuelle plane ici dans le cas d'un format parallélépipédique). On comprend que ce surplus correspond sensiblement à la surface de la portion 5 en excès après le rétrécissement de l'âme isolante 1.

La figure 5 illustre un exemple non limitatif d'équipement 13 permettant de former par compression le matériau poreux 3a constituant le coeur du panneau 3. Les ondulations 6 en surface, de chaque côté du panneau 3 résultent de l'empreinte présente sur les deux plaques de compression 14 et 15. Un dispositif de guidage avec des guides 16 permet d'ajuster l'épaisseur e désirée pour le matériau poreux 3a formant l'âme isolante 1. La plaque de compression 15 est par exemple mobile dans l'enceinte 17 de moulage pour permettre d'opérer avec l'épaisseur e souhaitée. Des organes de pressage 18 (ici deux organes) permettent de rapprocher les plaques de compression 14 et 15. On comprend que l'équipement 13 permet de former simultanément un relief R sur la face 4a et sur la face 4b. Chacune de ces faces 4a et 4b est alors ensuite, directement ou indirectement, recouverte par les première et deuxième portions 5 et 7 de l'enveloppe barrière 2, comme illustré par la succession des figures 3A et 3B.

La plaque de compression peut présenter une plus grande dimension pour venir buter sur un bord annulaire de l'enceinte 17. Le périmètre de la plaque formant le matériau poreux 3a est délimité par une paroi latérale de l'enceinte 17 qui s'étend depuis un organe de support 19 sensiblement plan. La paroi latérale de l'enceinte 17 s'étend depuis cet organe de support 19 jusqu'au bord annulaire et un bras mobile des organes de pressage 18 traverse l'organe de support 19. Ce bras mobile permet d'entraîner le déplacement relatif en translation de la plaque de compression 15 par rapport à la base de la paroi latérale 17.

Des dispositifs d'évacuation de poussières peuvent le cas échéant être prévus au niveau des plaques de compression 14 et/ou 15. Bien entendu, d'autres configurations peuvent être utilisées pour définir une ou deux surfaces de support 21, 22 directement sur les faces principales 4a, 4b du matériau poreux 3a. Le relief R est de préférence similaire sur ces deux faces 4a, 4b, et s'étend sur au moins 90% de la face considérée, de préférence 100% ce qui signifie, dans l'exemple illustré non limitatif des figures 2A et 4, que les zones planes sont entièrement supprimées.

En référence aux figures 2A-2b, on comprend qu'on forme des bossages 30 à sommet arrondi sur la première surface de support 21. Le fait de texturer ainsi la première surface de support 21 permet d'obtenir une surface déployée réelle, pour le contact avec l'enveloppe barrière 2, qui compense le retrait du matériau poreaux 3 formant le coeur. Cela réduit ainsi considérablement les contraintes de cisaillement affectant la ou les couches de l'enveloppe barrière 2. Bien entendu, il est préférable de texturer de cette manière les deux faces principales 4a, 4b du matériau poreux lorsque l'on conçoit l'enveloppe barrière 2 à l'aide de films ou feuillets sur les deux faces.

Lorsqu'on utilise une solution du type de celle illustrée à la figure 5, on comprend que la première surface de support 21 avec son relief R est obtenue par transcription d'un relief avec ondulations présent sur un organe rigide complémentaire, par exemple une plaque ou un rouleau.

Pendant la mise sous vide, l'enveloppe barrière 2 étanche au gaz est apposée pour envelopper la plaque de matériau poreux 3a et recouvrir la première surface de support 21, directement ou indirectement. L'arrêt du vide a pour effet de soumettre l'extérieur de l'enveloppe 2 à une pression externe (pression atmosphérique). Par conséquent, le matériau de l'enveloppe 2 souple est fléchi dans les zones non supportées par les bossages 30. En pratique, on obtient simultanément la rétractation du matériau poreux 3a de l'âme isolante 1 et l'insertion dans les cavités 40 des zones poussées et infléchies de la portion 5. Ces zones infléchies, en forme de vallons, comprennent les creux 8 et les cols 10 illustrés sur la figure 4.

Plus généralement, la portion 5 de l'enveloppe barrière 2, qui s'étend le long de la première surface de support 21, 21', se conforme selon le relief avec ondulations 6 dès l'arrêt de la mise sous vide, tout en conservant sa fonction d'étanchéité aux gaz. Au moins une face principale F1, F2 du panneau 3 est ainsi formée avec un aspect vallonné qui reprend les ondulations 6 de la surface de support correspondante 21 ou 23. Comme illustré sur les figures 2A-3A, la première surface de support 21 conserve évidemment sa géométrie externe avec le même relief R, qui est le même avant et après la mise en place de l'enveloppe barrière 2 plus souple que la couche sous-jacente.

En référence aux figures 1 et 4, on peut voir que les projections 5a peuvent couvrir sensiblement la moitié de la surface apparente définie à l'intérieur du périmètre de la face externe F1. Un motif élémentaire du vallonnement peut typiquement présenter une projection 5a au centre et une fraction des quatre creux adjacents, aux quatre coins de ce motif. On comprend que les projections 5a peuvent être ainsi réparties en quinconce. Chaque fraction correspond ici sensiblement à un quart d'un creux 8 (ce qui signifie que les creux 8 et les projections 5a définissent sensiblement une même surface). Cependant en variante, on peut moduler la longueur d'onde dans une série 9 différemment de la série perpendiculaire, par exemple pour s'adapter au comportement du matériau poreux 3a pendant le rétrécissement.

Bien que l'exemple illustré sur les figures 1-3B et 5 montre que la première surface de support 21 est définie par l'une au moins des deux faces principales 4a, 4b du matériau poreux 3a, on comprend qu'on peut aussi ajouter une couche intermédiaire souple sans effet barrière qui reprend la même conformation avec ondulations 6 que la face du matériau poreux 3a qu'elle recouvre. Dans ce cas, la surface de support est distincte du matériau poreux 3a et est formée par une couche additionnelle qui est aussi poreuse ou pourvue de trous. La conformation de la figure 4 ou conformation similaire pour la portion 5 peut ainsi être obtenue sans contact direct avec la face 4a avec relief du matériau poreux 3a (cas qui reste similaire à celui de la figure 3B, mais avec une sous-couche mince le long de la portion 5).

Dans les formes de réalisation exposées ci-dessus, le relief R sur la première surface de support 21 résulte typiquement de l'empreinte formée sur la face principale 4a, 4b sous-jacente du corps poreux 3a résistant à la compression. Le transfert de l'empreinte peut être réalisé autrement que par compressions, l'utilisation de calandres gravées avec le relief pouvant être par exemple une autre option de transfert. On comprend que le fait de façonner différemment le matériau poreux 3a n'a pas d'incidence sur le reste du procédé de fabrication.

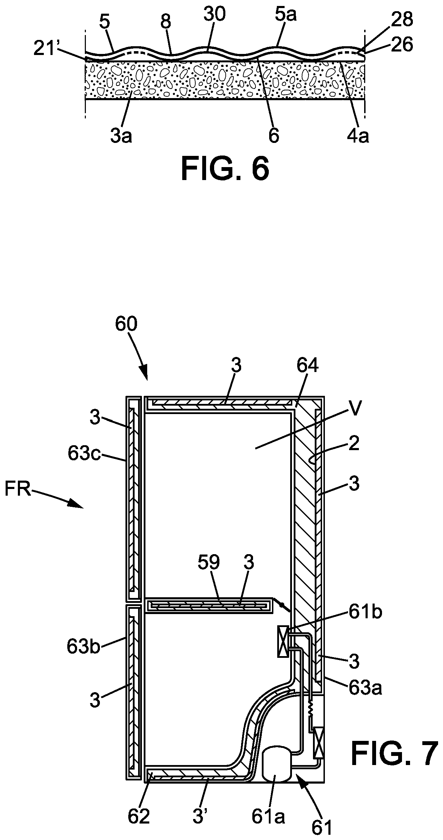

Alternativement, on peut former la première surface de support 21' comme illustré sur la figure 6. Dans ce cas, la première surface de support 21' est définie extérieurement au matériau poreux 3a, par une couche intermédiaire 26 qui est typiquement plus mince que le matériau poreux 3a. La couche intermédiaire 26 est souple (ici sans effet barrière) et peut présenter des perforations localisées 28. Les bossages 30 sont formés intrinsèquement par cette couche intermédiaire 26, la face principale 4a du matériau poreux 3a pouvant être sensiblement plane. Dans cet exemple, on peut utiliser un bloc poreux en matériau minéral tel que la silice ou en polymère pour définir l'âme isolante 1. La couche intermédiaire 26 qui définit le motif en relief peut envelopper le bloc poreux, de préférence entièrement. Dans le cas de la figure 6, on comprend que la première surface de support 21' n'est pas pliée car elle plus rigide que l'enveloppe barrière 2 et, de préférence, plus rigide que la couche intermédiaire 26.

En pratique, on peut par exemple interposer un film gaufré ou un tissu entre le matériau poreux 3a formant le coeur du panneau 3 et l'enveloppe barrière 2. Dans ce cas ce film formant la couche intermédiaire 26 peut servir de contention des poussières générées. Il peut évidemment être perforé ou poreux pour assurer une bonne mise sous vide. Des films thermoplastiques en PE, PET, PP, etc. sont en particulier utilisables. Un tissu, définissant une couche continue et/ou sans angles de pliage significatifs, peut également être utilisé pour former des bossages 30 et des cavités 40.

On comprend que les bossages 30 alternent avec des cavités 40 sur la première surface de support 21, 21' afin que l'extérieur du panneau 3 présente des ondulations 6. Les bossages 30 peuvent être distribués selon des rangées, suivant une direction déterminée, la première surface de support 21, 21' ayant suivant la direction déterminée une forme sinusoïdale avec une alternance de tronçons courbes convexes (correspondant aux bossages 30) et de tronçons courbes concaves (zone intercalaires qui permettent de délimiter les cavités 40).

En référence aux figure 3A et 3B, on peut voir que la première portion 5 de l'enveloppe barrière 2 épouse le relief R de la première surface de support 21 lorsque la mise sous vide cesse. Les flèches C de la figure 3B illustrent le phénomène de rétrécissement du matériau poreux 3a. Sous l'effet de la pression externe, une contraction est observée essentiellement suivant les deux plus grandes dimensions de l'âme isolante 1 (même lorsque la valeur relative de rétractation est identique dans les trois dimensions, il est clair que la valeur absolue est bien plus faible pour l'épaisseur). Comme la première portion 5 de l'enveloppe barrière 2 se conforme selon le relief R, les projections 5a à sommet arrondi sont parfaitement en correspondance avec les bossages 30.

Dans un mode de réalisation préféré, comme bien visible sur les figures 2A et 2B, le relief R définit des séries S de cavités 40, qui s'étendent de préférence parallèlement comme des rangées. Les cavités 40 d'une même série S sont séparées deux à deux par une zone de jonction J ayant une courbure convexe dans au moins une direction qui permet de réduire progressivement la profondeur de chacune des cavités 40 depuis une zone centrale 41. Cette zone centrale 41 correspond à un maximum de profondeur de la cavité 40 considérée. Lorsque le relief R définit un maillage régulier, de préférence en s'étendant entre deux extrémités opposées 31, 32 du panneau 3, la première surface de support 21 présente des ondulations dans deux directions transverses l'une par rapport à l'autre.

Avec cette configuration la zone centrale 41 définit un centre équidistant entre quatre bossages 30. Les zones de jonction J entre les cavités 40 forment une intersection entre deux profils transverses (ici perpendiculaires) dont l'un est un profil convexe entre deux zones centrales 41 et l'autre est un profil concave entre deux bossages 30 adjacents.

En référence à la figure 4, on comprend que les cols 10 formés par la première portion 5 de l'enveloppe barrière 2 coïncident chacun avec une des zones de jonction J. De la même façon, les creux 8 coïncident évidemment avec les cavités 40 de la première surface de support 21.

Comme visible sur les figures 2A-3B, la distance entre les séries S de cavités 40 est réduite et on préfère que l'écartement E entre les séries S soit constant (il s'agit d'un écartement E mesuré à Z=0). Chacune des cavités 40 présente ici un centre 40a dans la zone centrale 41, ce centre 40a correspondant à un maximum local de profondeur comme illustré sur les figures 2A-2B et 3A. On prévoit aussi un écartement λ qui est ici constant entre les centres 40a de deux cavités adjacentes 40 séparées par un bossage 30. Dans un mode de réalisation préféré, cet écartement λ, mesuré suivant une direction (cf. axe X sur la figure 2A) perpendiculaire à la direction utilisée pour mesurer l'amplitude h, est telle que la relation suivante est vérifiée :

$$2 \le \lambda/h \le 15$$

sachant que h et λ sont exprimées en millimètres. On comprend que l'amplitude des ondulations 6 reste faible ou modérée (avec un rayon de courbure qui est suffisant et un caractère progressif des courbures respectives convexes et concaves). Les bossages 30 peuvent cependant présenter un profil non aplati (comme bien visible sur la figure 2B) en choisissant une amplitude h qui est supérieure ou égale à 0,5 mm (sans dépasser un seuil maximum qui est, de préférence, d'environ 2 mm). Sur la figure 2B, on comprend que les graduations de l'axe Z sont exprimées en millimètres.

Afin de guider de façon contrôlée les zones infléchies de la première portion 5, le relief R de la première surface de support 21 peut avantageusement présenter une structure sinusoïdale selon les deux axes longueur et largeur du panneau 3, comme illustré sur la figure 4. Ces deux axes correspondent à X et Y dans le cas de la figure 2A. On comprend alors que les séries S s'étendent chacune suivant une direction générale intermédiaire (typiquement à environ 45°) entre les axes X et Y, dans le plan défini par les deux axes X et Y. Un exemple non limitatif avec deux options de géométrie est exposé ci-après.

Exemple

Dans cet exemple, on considère le cas d'une âme isolante 1 disponible dans le commerce, par exemple à base de silice pyrogénée, présentant un retrait de 4,5 %. Dans le cas d'un relief R avec une structure sinusoïdale selon les deux axes longueur et largeur du panneau 3, le calcul pour obtenir une surface développée qui présente un excès similaire (de 4,5%) par rapport à la surface apparente finale (sans prendre en compte le relief R) a donné comme résultat plusieurs options :

- option 1 avec une amplitude h de 1,72 mm et une longueur d'onde de 12,5 mm (λ = 12,5) ;
- option 2 correspondant à maillage encore plus serré, avec une amplitude h de 0,86 mm et une longueur d'onde de 6,3 mm (λ = 6,3).

Dans ces deux options sans le moindre caractère limitatif, les paramètres d'amplitude (différence entre le niveau supérieur L3 et le niveau inférieur L1) et de longueur d'onde sont choisis identiques dans les deux directions des sinusoïdes (ce qui correspond au cas non limitatif de la figure 4). L'exemple illustré sur la figure 2A est conforme à l'option 1. Bien entendu, la courbure des bossages 30 peut varier et le point culminant peut être plus étendu comme dans l'exemple de la figure 2B (avec une face supérieure plane de faible surface, par exemple inférieure à 1 mm$^2$, typiquement inférieure ou égale à 0,49 mm$^2$ et de préférence inférieure ou égale à 0,25 mm$^2$).Plus généralement, la longueur d'onde, qui correspond à la distance entre deux sommets de bossages 30 adjacents d'une même rangée, est ici choisie inférieure à 20 mm et de préférence inférieure à 10 mm. L'amplitude h est ici inférieure ou égale à 2 mm pour limiter les flexions locales de l'enveloppe barrière 2 et de préférence elle ne dépasse pas 1 mm comme dans l'option 2 présentée ci-dessus.

Bien entendu, l'amplitude définie dans une zone de surface peut localement différer d'une autre zone de surface dans la surface de support 21, 21'. On peut ainsi prévoir des zones légèrement plus aplaties en alternance avec des zones dont le relief est plus accentué. La longueur d'onde λ peut aussi varier en correspondance. Ces variations peuvent être avantageusement limitées pour que le ratio λ/h reste inférieur à 15, et de préférence inférieur à 10.

On peut noter ici qu'au niveau Z=0 dans le cas de la figure 2A (qui permet de définir le niveau L2 des cols 10 après application de l'enveloppe 2), on trouve la séparation entre les bossages 30 et les cavités 40. Le point culminant du bossage 30 se situe à Z = +0,86 dans l'option 1, tandis que le centre 40a se situe à Z = - 0,86. La zone de jonction J avec une courbure convexe (en particulier suivant la direction des séries S de cavités 40) coïncide alors avec ce niveau Z=0. La zone de jonction J peut cependant, dans des variantes, se situer à un niveau différent du niveau Z=0. Par ailleurs, on comprend que les cavités 40 peuvent présenter une profondeur (selon l'axe Z) qui n'est pas égale à la hauteur (selon l'axe Z) des bossages 30. En effet, la pente peut le cas échéant être accentuée ou réduite pour former les cavités 20.

Bien entendu, d'autres options peuvent être utilisées en fonction des besoins et/ou en fonction de la nature du matériau poreux 3a. On signale ici deux variantes de réalisation. Une première variante concerne la forme du vallonnement. Bien que la forme à double sinusoïdale soit préférée, différentes formes peuvent être appliquées avec une alternance de creux 8 et de projections 5a. On peut donc prévoir le cas échéant des courbures différentes de celle d'une sinusoïde, au moins dans les creux 8 et/ou dans les cols 10. Une deuxième variante peut prendre en compte le cas des matériaux poreux 3 non orthotropes utilisés pour former l'âme isolante 1. La géométrie du relief R est alors ajustée au comportement mécanique de l'âme isolante selon les deux axes (longueur et largeur) de son plan en choisissant pour chacune une longueur d'onde, avec une surface développée ayant l'excès souhaité par rapport à la surface apparente.

Bien entendu, les options et variantes mentionnées ci-dessus ne sont pas limitées au cas de panneaux 3 parallélépipédiques. La préparation du relief sur l'une au moins des faces principales n'a pas d'impact sur le procédé de mise sous vide et l'étape de soudure de l'enveloppe, de sorte que la solution avec le vallonnement sur la ou les faces F1, F2 peut être adaptée au cas des panneaux courbes ou qui présentent une géométrie particulière (on peut citer ici le cas de panneaux avec un trou central, utilisables autour d'une canalisation ou d'un hublot). Dans tous les cas, on préfère utiliser des bossages 30 qui couvrent au moins 15%, et de préférence au moins 25%, de la surface apparente définie à l'intérieur du périmètre de la face principale 4a.

Une utilisation de panneaux 3 pourvus d'ondulations 6, dans le domaine des enceintes isolées thermiquement, va à présent être décrite en référence à la figure 7.

Une enceinte 60, ici de type adiabatique, sert à délimiter le volume intérieur V d'un réfrigérateur FR. Au moins deux compartiments peuvent éventuellement être formés par utilisation de cloisons séparatrices 59. L'enceinte 60 est pourvue de moyens de rafraîchissement 61, par exemple un circuit de réfrigération. De manière connue en soi, un compresseur 61 a et un évaporateur 61 b font notamment partie d'un tel circuit de réfrigération du réfrigérateur FR.

L'enceinte 60 comporte une paroi de fond 62, une paroi latérale (63a, 63b, 63c) qui inclut des portes 63b, 63c de préférence sur un même côté, et une paroi supérieure 64. Au moins un panneau 3 conforme à l'invention peut s'étendre à l'arrière de l'interface formant évaporateur, dans une partie arrière 63b de la paroi latérale (63a, 63b, 63c). Un remplissage complémentaire avec une mousse de polyuréthanne peut recouvrir une face ou s'étendre le long du panneau 3 dans la partie arrière 63b.

Au moins un panneau 3 est ici inséré dans le corps des portes 63b et 63c, ce qui permet de limiter l'épaisseur de chaque porte tout en garantissant un très bon coefficient d'isolation thermique. Un panneau 3, 3' peut aussi être inséré de façon interne dans le corps de la paroi de fond 62 et de la paroi supérieure 64. On optimise ainsi le volume intérieur V pouvant être chargé sans augmenter les dimensions externes du réfrigérateur FR. On peut aussi noter que l'un au moins des panneaux 3' peut présenter une courbure, ici pour suivre la géométrie de la paroi de fond 62. Il est préférable que les panneaux 3, 3' soient agencés à l'intérieur d'un corps de paroi correspondant, pour éviter la dégradation de l'enveloppe barrière 2. Des économies sur le rendement du réfrigérateur FR peuvent être obtenues de façon significative avec un panneau 3, 3' conforme à l'invention. Un gain de l'ordre de 30 % peut être obtenu pour le réfrigérateur FR illustré par rapport à une conception sans panneau de type PIV dans les parois. De plus, les caractéristiques de surface des panneaux 3, 3' permettent de garantir que ce gain (gain énergétique) est obtenu durablement.

Bien entendu, on peut utiliser de façon analogue des panneaux 3 dans une enceinte prévue pour conserver une température plus élevée que le milieu ambiant et pourvue de moyens de chauffage. Par ailleurs, d'autres applications de rafraîchissement sont satisfaites de manière optimale avec des panneaux 3, 3' selon l'invention, par exemple des chambres frigorifiques de véhicules de transport ou des chambres d'entrepôt frigorifiques.

Une utilisation de panneaux 3 pourvus d'ondulations 6, dans le domaine du bâtiment, va à présent être décrite en liaison avec la figure 8.

L'élément de paroi 70 montré sur la figure 8 est prévu pour doubler une cloison intérieure d'un bâtiment. Au moins une couche thermiquement isolante est formée en alignant des rangées de panneaux 3 conformes à l'invention. Une ossature primaire 74 permet d'intégrer plusieurs panneaux 3 de type PIV sans protection mécanique associée ayant chacun un format parallélépipédique, avec la même épaisseur. Les panneaux 3 sont montés sur l'ossature primaire 74 et répartis dans une couche 69 d'isolation thermique qui présente plusieurs rangées de panneaux 3, ici de même largeur. Dans l'exemple illustré, les faces avant des panneaux F1 permettent de constituer la face avant de cette couche, tandis qu'une face arrière orientée vers la paroi 68 à revêtir est formée par les faces F2 opposées aux faces F1 (une seule couche de panneaux 3). On peut bien entendu aussi associer deux couches de panneaux 3.

La paroi 68 peut être formée de briques ou parpaings jointoyés. Ici, les panneaux 3 sont agencés en deux rangées et il est prévu au moins un profilé intermédiaire de support 67b et des profilés de support 67a et 67c aux extrémités de la couche 69, qui font partie de l'ossature primaire 74. Les profilés 67a, 67b et 67c peuvent être raccordés directement à la paroi 68, par exemple par collage ou par vissage, ou maintenus parallèle à la paroi 68 de façon indirecte (par exemple à l'aide de montants, profilés, et/ou entretoises situés en arrière de la couche 69 de panneaux 3). Le profilé intermédiaire 67b a un profil en H et définit la jonction entre la première rangée et la deuxième rangée de panneaux 3. Les autres profilés 67a et 67c peuvent avoir une section en U. Chaque profilé est de préférence réalisé d'une pièce et peut présenter un organe d'ancrage frontal pour recevoir une entretoise 75 utilisée pour espacer un parement 76. Le parement 76 peut typiquement être maintenu par des montants d'une ossature secondaire (non représenté). Dans ce cas une extrémité des entretoises 75 peut se raccorder dans une fourrure ou autre système de fixation des montants. Plus généralement, on comprend que les panneaux 3 sont associés à une ossature rigide 72 qui minimise la distance entre deux panneaux 3 adjacents séparés par une partie de maintien et support. Cette distance est typiquement inférieure à 3 ou 4 mm.

De préférence, les profilés de support 67a, 67b, 67c sont formés d'un seul bloc en matière plastique, par exemple en polyamide, en PVC, résine de polyuréthane ou encore à base de matériaux composites, de fibres de verre, éventuellement avec des particules (par exemple polyamide PA 66 chargé à 25% de fibres de verre). Une matière d'amortissement, par exemple une mousse, peut être prévue dans les cavités recevant les tranches des panneaux 3, afin de minimiser les frottements avec les projections 5a de l'enveloppe barrière 2. Les bossages 30 peuvent être étirés dans une direction pour éviter de concentrer les frottements dans une zone trop localisée. Alternativement, il peut être prévu de former les projections 5a à sommet arrondi seulement dans une zone qui ne coïncide pas avec les cavités des profilés 67a, 67b, 67c. Dans ce cas on peut prévoir une marge périphérique qui n'excède pas 30 ou 40 mm de largeur et qui présente soit une planéité, soit une alternance de zones planes et de cavités espacées les unes des autres et/ou des rainures. Dans une alternative, on peut aussi former une surcouche de protection uniquement dans la marge de l'une au moins des faces F1 et F2.

Chacun des profilés de support 67a, 67b, 67c a ici une conductivité thermique inférieure ou égale à 0,6 W m$^{-1}$ K$^{-1}$ et de préférence inférieure à 0,2 ou 0,25 W m$^{-1}$ K$^{-1}$. Afin de minimiser la conduction de chaleur au travers de la couche de panneaux 3, une conductivité thermique inférieure ou égale à 0,18 W m$^{-1}$ K$^{-1}$ est préférée pour le matériau des profilés 67a, 67b, 67c.

Bien entendu, il est permis de mixer des panneaux conventionnels de type PIV avec des panneaux 3 selon l'invention, dans un élément de paroi 70 pour bâtiment. L'élément de paroi 70 n'est pas nécessairement limité à un doublage de cloison : on peut prévoir d'intégrer au moins un panneau 3 dans un module de plancher (à l'intérieur de caissons) ou dans une sous-couche protégée par des éléments supérieurs de protection, rigides.

Les applications pour utiliser les panneaux 3 ne sont pas limités au stockage, transport de matériaux sensibles à la température, ni à l'isolation de parois (murs, toiture, plancher) dans les bâtiments pour lesquels de très longues durées de service sont requises. On peut intégrer les panneaux 3 dans les réservoirs ou maisons de stockage de glace, véhicules, bateaux, sous-marins, des remorques de camions, wagons de marchandises, chauffe-eau, moyens de chauffage et de refroidissement de conduits, tubes pour le stockage et le transport de gaz de faible point d'ébullition. En outre, le panneau d'isolation sous vide 3 peut avantageusement être combiné avec un matériau à changement de phase servant au stockage d'énergie thermique.

Un des avantages de l'invention est fournir un panneau 3 dont le format peut être complètement similaire aux panneaux PIV existants, et dont la longévité est améliorée. On peut noter que le procédé de conception des panneaux 3 n'est pas complexifié et les dénivelés sur la ou les faces F1, F2 du panneau 3 de type PIV sont suffisamment faibles (typiquement moins de 2 ou 3 mm de dénivelé) pour ne pas causer de gêne pour la mise en place dans des applications d'isolation thermique. Bien entendu, il est permis de texturer une seule face du panneau 3, par exemple pour des applications qui prévoient de noyer d'un côté le panneau 3 dans une matière étanche aux gaz.

L'amélioration de la performance pour l'effet barrière peut aussi se traduire par la possibilité d'employer une enveloppe 2 moins haut de gamme (films unitaires moins sophistiqués, moins nombreux, métallisation plus rapide), donc moins coûteuse. C'est le cas des équipements comme par exemple les réfrigérateurs, congélateurs et ballons d'eau chaude sanitaire.

## Revendications

1. Panneau thermo-isolant (3, 3') de type PIV, comprenant :

   - un matériau poreux (3a) résistant à la compression, qui définit deux faces principales opposées (4a, 4b) et dont la plus petite dimension est une épaisseur maximale (e) entre ces deux faces ; et
   - une enveloppe barrière (2) étanche aux gaz permettant de maintenir un vide intérieur et qui renferme le matériau poreux (3a), l'enveloppe étant réalisée à partir d'au moins un film ou feuillet souple et présentant :

      - une première portion (5) qui recouvre une première des deux faces principales, et
      - une deuxième portion (7) qui recouvre une deuxième des deux faces principales,

      - une première surface de support (21, 21') pourvue d'un relief (R), sous-jacente à la première portion (5) de l'enveloppe barrière (2) ;

   **caractérisé en ce que** la première surface de support (21, 21') présente des ondulations (6) en formant des bossages (30) vers l'extérieur, chacun à sommet arrondi,
   et **en ce que** l'enveloppe barrière (2) définit la couche externe du panneau (3, 3') mise sous pression atmosphérique, la première portion (5) de l'enveloppe barrière (2) s'étendant le long de la première surface de support et étant déformée pour se conformer selon ledit relief (R) avec des projections (5a) à sommet arrondi en correspondance avec lesdits bossages (30).

2. Panneau selon la revendication 1, dans lequel la première surface de support (21, 21') présente, en complément des bossages (30), des séries (S) de cavités (40), deux cavités adjacentes d'une même série (S) se rejoignant par une zone de jonction (J) ayant une courbure convexe dans au moins une direction qui permet de réduire progressivement la profondeur de chacune des cavités (40) depuis une zone centrale (41) qui correspond à un maximum de profondeur de la cavité considérée.

3. Panneau selon la revendication 1 ou 2, dans lequel l'enveloppe barrière (2) est constituée d'un film étanche dont l'épaisseur est inférieur à 1 mm, la première portion (5) de l'enveloppe barrière (2) définissant au moins trois niveaux de surface (L1, L2, L3), avec:

- des creux (8) d'une profondeur déterminée qui coïncident avec des cavités (40) de la première surface de support (21, 21'), qui définissent le niveau inférieur (L1) des trois niveaux ;
- les projections (5a) à sommet arrondi, adjacentes aux creux (8) et séparant deux séries (9) de creux, qui définissent le niveau supérieur (L3) des trois niveaux ; et
- des cols (10) moins profonds que les creux (8), séparant deux des projections (5a), et définissant un niveau intermédiaire (L2) des trois niveaux.

4. Panneau selon la revendication 3, dans lequel les projections (5a) affleurent au niveau d'un même plan tangent (P), la première surface de support (21, 21') définissant :

- une surface apparente telle que perçue en deux dimensions sans prendre en compte le relief (R) ; et
- une surface développée qui prend en compte le relief (R) ;

sachant que la surface développée est supérieure d'au moins 2% à la surface apparente, et de préférence supérieure d'un pourcentage compris entre 3 et 6% par rapport à la surface apparente.

5. Panneau selon la revendication 3 ou 4, dans lequel la différence entre le niveau supérieur (L3) et le niveau inférieur (L1) est comprise entre 0,3 et 2 mm et est inférieure à la distance d'espacement E entre les sommets respectifs de deux projections (5a) adjacentes.

6. Panneau selon la revendication 2 seule ou combinée à l'une des revendications 3 à 5, dans lequel chacune des séries (S) de cavités (40) s'étend selon une même direction générale, de sorte que les bossages (30) sont répartis en quinconce et les cavités (40) sont réparties en quinconce.

7. Panneau selon la revendication 2 seule ou combinée à l'une des revendications 3 à 6, dans lequel les deux faces principales (4a, 4b) sont parallèles et chacune des cavités (40) présente un centre (40a) correspondant à un maximum local de profondeur, la première surface de support (21, 21') vérifiant la relation suivante :

$$2 \leq \lambda/h \leq 15$$

où

h représente une amplitude maximale du relief (R) mesurée perpendiculairement aux deux faces principales (4a, 4b) et exprimée en millimètres, et
λ représente un écartement entre deux centres (40a) de cavités (40) adjacentes séparées par un bossage, cet écartement, qui de préférence est constant, étant exprimé en millimètres, mesuré suivant une direction qui est perpendiculaire à la direction utilisée pour mesurer l'amplitude h.

8. Panneau selon l'une quelconque des revendications précédentes, dans lequel la première surface de support (21, 21') s'étend entre deux extrémités opposées (31, 32) du panneau (3), les bossages (30) étant distribués de façon à ce que le relief (R) s'étende entre lesdites deux extrémités opposées du panneau.

9. Panneau selon l'une quelconque des revendications précédentes, dans lequel les bossages (30) sont distribués selon des rangées, suivant une direction déterminée, la première surface de support (21, 21') ayant suivant ladite direction déterminée une forme sinusoïdale avec une alternance de tronçons courbes convexes et de tronçons courbes concaves.

10. Panneau selon l'une quelconque des revendications 1 à 9, dans lequel la première surface de support (21) est définie par l'une au moins des deux faces principales (4a, 4b) du matériau poreux (3a).

11. Panneau selon l'une quelconque des revendications 1 à 9, dans lequel la première surface de support (21') est définie par une couche intermédiaire (26) distincte du matériau poreux et plus mince que le matériau poreux (3a).

12. Panneau selon l'une quelconque des revendications précédentes, dans lequel la première surface de support (21, 21') présente des ondulations dans deux directions transverses l'une par rapport à l'autre.

**13.** Panneau selon l'une quelconque des revendications précédentes, comprenant une deuxième surface de support (23) pourvue d'un relief, sous-jacente à la deuxième portion (7) de l'enveloppe barrière (2), chacune des première et deuxième surfaces de support étant dépourvues de surfaces planes, le panneau (3) ayant un format parallélépipédique, de préférence à section rectangulaire.

**14.** Procédé de fabrication d'un panneau thermo-isolant (3) de type PIV selon l'une quelconque des revendications précédentes, utilisant une plaque du matériau poreux (3a) résistant à la compression et comprenant les étapes consistant essentiellement à :

- former une première surface de support (21, 21') avec un relief (R), par transcription d'un relief avec ondulations présent sur une plaque ou un rouleau, de façon ce que la première surface de support présente des bossages (30) vers l'extérieur, chacun à sommet arrondi, la première surface de support étant choisie parmi une surface d'une face principale (4a, 4b) de la plaque de matériau poreux (3a), et une surface principale d'une couche intermédiaire (26) distincte du matériau poreux ;
- pendant une mise sous vide postérieure à la formation du relief (R), envelopper la plaque de matériau poreux (3a) et recouvrir la première surface de support (21, 21'), directement ou indirectement, par une enveloppe barrière (2) étanche aux gaz permettant de maintenir un vide intérieur ; et
- soumettre à une pression atmosphérique l'extérieur de l'enveloppe, ce grâce à quoi une portion (5) de l'enveloppe barrière (2) s'étend le long de la première surface de support (21, 21') et se conforme selon un relief avec ondulations (6) résultant d'un contact avec le relief (R) pour former une face principale (F1, F2) du panneau (3) pourvue de projections (5a).

**15.** Elément de paroi (70) thermiquement isolant pour bâtiment, **caractérisé en ce qu'**il comprend une pluralité de panneaux (3) selon l'une des revendications 1-13 collés ou bien fixées au moyen d'une ossature rigide (72) dans au moins une couche d'isolation thermique (69).

**16.** Enceinte (60) pourvue de moyens de rafraîchissement (61) ou de chauffage, destinée à isoler thermiquement un volume intérieur (V), comprenant une paroi de fond (62), une paroi latérale (63a, 63b, 63c) et une paroi supérieure (64), **caractérisée en ce qu'**elle comporte au moins un panneau (3) selon une des revendications 1-13 formant partie d'une paroi parmi la paroi de fond (62), la paroi latérale (63a, 63b, 63c) et la paroi supérieure (64).

**Patentansprüche**

**1.** VIP-Wärmedämmplatte (3, 3'), umfassend:

- ein druckfestes poröses Material (3a), das zwei gegenüberliegende Hauptflächen (4a, 4b) definiert und dessen kleinstes Maß eine maximale Stärke (e) zwischen diesen zwei Flächen ist; und
- eine das Halten eines Innenvakuums ermöglichende gasdichte Sperrhülle (2), die das poröse Material (3a) einschließt, wobei die Hülle aus wenigstens einer elastischen Folie oder Schicht besteht und aufweist:

- einen ersten Teil (5), der eine erste der zwei Hauptflächen abdeckt, und
- einen zweiten Teil (7), der eine zweite der zwei Hauptflächen abdeckt,

- eine unter dem ersten Teil (5) der Sperrhülle (2) liegende, mit einem Relief (R) ausgestattete erste Stützfläche (21, 21') ;

**dadurch gekennzeichnet, dass** die erste Stützfläche (21, 21') Wellen (6) in Form von Höckern (30) nach außen, jeweils mit abgerundeter Spitze, aufweist,
und dass die Sperrhülle (2) die dem atmosphärischen Druck ausgesetzte äußere Schicht der Platte (3, 3') definiert, wobei sich der erste Teil (5) der Sperrhülle (2) entlang der ersten Stützfläche erstreckt und verformt wird, um sich an das Relief (R) mit Vorsprüngen (5a) mit abgerundeter Spitze entsprechend den Höckern (30) anzupassen.

**2.** Platte nach Anspruch 1, wobei die erste Stützfläche (21, 21') zusätzlich zu den Höckern (30), Reihen (S) von Hohlräumen (40) aufweist, wobei sich zwei angrenzende Hohlräume einer gleichen Reihe (S) durch einen Verbindungsbereich (J) mit einer konvexen Krümmung in wenigstens einer Richtung, dank derer die Tiefe von jedem der Hohlräume (40) von einem Mittenbereich (41), der einer Höchsttiefe des jeweiligen Hohlraums entspricht, schrittweise reduziert werden kann, verbinden.

**3.** Platte nach Anspruch 1 oder 2, wobei die Sperrhülle (2) aus einer dichten Folie besteht, deren Stärke weniger als 1 mm beträgt, wobei der erste Teil (5) der Sperrhülle (2) wenigstens drei Flächenniveaus (L1, L2, L3) definiert, mit:

- Vertiefungen (8) mit einer vorgegebenen Tiefe, die mit Hohlräumen (40) der ersten Stützfläche (21, 21') übereinstimmen, die das untere Niveau (L1) der drei Niveaus definieren;
- den an die Vertiefungen (8) angrenzenden und zwei Reihen (9) von Vertiefungen trennenden Vorsprüngen (5a) mit abgerundeter Spitze, die das obere Niveau (L3) der drei Niveaus definieren; und

- zwei der Vorsprünge (5a) trennenden und ein Zwischenniveau (L2) der drei Niveaus definierenden Sätteln (10), die weniger tief als die Vertiefungen (8) sind.

4. Platte nach Anspruch 3, wobei die Vorsprünge (5a) auf dem Niveau einer gleichen Tangentenebene (P) bündig sind, wobei die erste Stützfläche (21, 21') Folgendes definiert:

- eine Sichtfläche wie in zwei Dimensionen wahrgenommen ohne Berücksichtigung des Reliefs (R); und
- eine abgewickelte Fläche, die das Relief (R) berücksichtigt;

wobei die abgewickelte Fläche wenigstens 2 % größer ist als die Sichtfläche und vorzugsweise um eine Prozentzahl zwischen 3 und 6 % größer ist als die Sichtfläche.

5. Platte nach Anspruch 3 oder 4, wobei der Unterschied zwischen dem oberen Niveau (L3) und dem unteren Niveau (L1) zwischen 0,3 und 2 mm liegt und kleiner ist als der Abstand E zwischen den jeweiligen Spitzen von zwei angrenzenden Vorsprüngen (5a).

6. Platte nur nach Anspruch 2 oder kombiniert mit einem der Ansprüche 3 bis 5, wobei sich jede der Reihen (S) von Hohlräumen (40) in einer gleichen allgemeinen Richtung erstreckt, so dass die Höcker (30) versetzt verteilt sind und die Hohlräume (40) versetzt verteilt sind.

7. Platte nur nach Anspruch 2 oder kombiniert mit einem der Ansprüche 3 bis 6, wobei die zwei Hauptflächen (4a, 4b) parallel sind und jeder der Hohlräume (40) eine Mitte (40a) entsprechend einer lokalen Höchsttiefe aufweist, wobei die erste Stützfläche (21, 21') der folgenden Beziehung entspricht:

$$2 \leq \lambda/h \leq 15$$

wobei h eine maximale Amplitude des Reliefs (R), senkrecht zu den zwei Hauptflächen (4a, 4b) gemessen und in Millimetern ausgedrückt angibt, und λ einen Abstand zwischen zwei Mitten (40a) von durch einen Höcker getrennten angrenzenden Hohlräumen (40) angibt, wobei dieser Abstand, der vorzugsweise konstant ist, in Millimetern ausgedrückt und in einer Richtung gemessen wird, die senkrecht zur zum Messen der Amplitude h verwendeten Richtung verläuft.

8. Platte nach einem der vorhergehenden Ansprüche, wobei sich die erste Stützfläche (21, 21') zwischen zwei gegenüberliegenden Enden (31, 32) der Platte (3) erstreckt, wobei die Höcker (30) so verteilt sind, dass sich das Relief (R) zwischen den zwei gegenüberliegenden Enden der Platte erstreckt.

9. Platte nach einem der vorhergehenden Ansprüche, wobei die Höcker (30) in Reihen in einer vorgegebenen Richtung verteilt sind, wobei die erste Stützfläche (21, 21') in der vorgegebenen Richtung eine Sinusform mit einem Abwechseln von konvexen Kurvenabschnitten und konkaven Kurvenabschnitten hat.

10. Platte nach einem der Ansprüche 1 bis 9, wobei die erste Stützfläche (21) durch wenigstens eine der zwei Hauptflächen (4a, 4b) des porösen Materials (3a) definiert ist.

11. Platte nach einem der Ansprüche 1 bis 9, wobei die erste Stützfläche (21') durch eine vom porösen Material verschiedene Zwischenschicht (26), die dünner ist als das poröse Material (3a), definiert ist.

12. Platte nach einem der vorhergehenden Ansprüche, wobei die erste Stützfläche (21, 21') Wellen in zwei quer zueinander verlaufenden Richtungen aufweist.

13. Platte nach einem der vorhergehenden Ansprüche, umfassend eine mit einem Relief ausgestattete, unter dem zweiten Teil (7) der Sperrhülle (2) liegende zweite Stützfläche (23), wobei die erste und die zweite Stützfläche jeweils keine ebenen Flächen aufweisen, wobei die Platte (3) ein Parallelepiped-Format, vorzugsweise mit rechteckigem Querschnitt, aufweist.

14. Verfahren zum Herstellen einer VIP-Wärmedämmplatte (3) nach einem der vorhergehenden Ansprüche, das ein druckfestes Paneel aus porösem Material (3a) verwendet und die Schritte umfasst, die im Wesentlichen bestehen aus:

- dem Bilden einer ersten Stützfläche (21, 21') mit einem Relief (R) durch Übertragen eines auf einem Paneel oder einer Walze vorhandenen Reliefs mit Wellen, so dass die erste Stützfläche Höcker (30) nach außen, jeweils mit abgerundeter Spitze, aufweist, wobei die erste Stützfläche aus einer Gruppe umfassend eine Fläche einer Hauptfläche (4a, 4b) des Paneels aus porösem Material (3a) und eine Hauptfläche einer vom porösen Material verschiedenen Zwischenschicht (26) gewählt wird;

- dem Umhüllen des Paneels aus porösem Material (3a) und Abdecken der ersten Stützfläche (21, 21') direkt oder indirekt durch eine gasdichte Sperrhülle (2), die das Halten eines Innenvakuums ermöglicht, während einer Vakuumbeaufschlagung nach dem Bilden des Reliefs (R); und

- dem Aussetzen des Äußeren der Hülle dem atmosphärischen Druck, wodurch sich ein Teil (5) der Sperrhülle (2) entlang der ersten Stützfläche (21, 21') erstreckt und an ein Relief mit aus einem Kontakt mit dem Relief (R) resultierenden Wellen (6) anpasst, um eine mit Vorsprüngen (5a) ausgestattete Hauptfläche (F1, F2) der Platte (3) zu bilden.

15. Wärmedämmendes Wandelement (70) für Gebäude, **dadurch gekennzeichnet, dass** es eine Vielzahl von Platten (3) nach einem der Ansprüche 1-13 umfasst, die mit einem starren Gerüst (72) in wenigstens einer Wärmedämmschicht (69) verklebt oder befestigt sind.

16. Umhüllung (60), die mit Kühlmitteln (61) oder Heizmitteln ausgestaltet ist und zur Wärmedämmung eines Innenraums (V) bestimmt ist, umfassend eine Bodenwand (62), eine Seitenwand (63a, 63b, 63c) und eine obere Wand (64), **dadurch gekennzeichnet, dass** sie wenigstens eine Platte (3) nach einem der Ansprüche 1-13 umfasst, die einen Teil einer Wand aus der Gruppe umfassend die Bodenwand (62), die Seitenwand (63a, 63b, 63c) und die obere Wand (64) bildet.

## Claims

1. Thermal insulation panel (3, 3') of the VIP type, comprising:

- a porous material (3a) resistant to compression, which defines two main opposite faces (4a, 4b) and of which the smallest dimension is a maximum thickness (e) between these two faces; and
- a gas-tight barrier casing (2) making it possible to maintain an inside vacuum and which encloses the porous material (3a), with the casing being carried out from at least one film or flexible sheet and having:

-- a first portion (5) which covers a first of the two main faces, and
-- a second portion (7) which covers a second of the two main faces,

- a first support surface (21, 21') provided with a relief (R), underlying with the first portion (5) of the barrier casing (2);

**characterised in that** the first support surface (21, 21') has corrugations (6) by forming bosses (30) outwards, each one with a rounded top,
and **in that** the barrier casing (2) defines the outer layer of the panel (3, 3') under atmospheric pressure, with the first portion (5) of the barrier casing (2) extending along the first support surface and being deformed in order to conform according to said relief (R) with bosses (5a) with a rounded top in correspondence with said bosses (30).

2. Panel according to claim 1, wherein the first support surface (21, 21') has, as a complement to the bosses (30), series (S) of cavities (40), with two adjacent cavities of the same series (S) being joined by a junction zone (J) having a convex curvature in at least one direction which makes it possible to progressively reduce the depth of each one of the cavities (40) from a central zone (41) which corresponds to a maximum of depth of the cavity considered.

3. Panel according to claim 1 or 2, wherein the barrier casing (2) is comprised of a sealed film of which the thickness is less than 1 mm, with the first portion (5) of the barrier casing (2) defining at least three surface levels (L1, L2, L3), with:

- hollows (8) of a determined depth that coincide with cavities (40) of the first support surface (21, 21'), which define the lower level (L1) of the three levels;
- the bosses (5a) with a rounded top, adjacent to the hollows (8) and separating two series (9) of hollows, which define the upper level (L3) of the three levels; and
- passes (10) that are not as deep as the hollows (8), separating two of the bosses (5a), and defining an intermediate level (L2) of the three levels.

4. Panel according to claim 3, wherein the bosses (5a) are flush at a level of the same tangent plane (P), with the first support surface (21, 21') defining:

- an apparent surface such as perceived in two dimensions without taking the relief (R) into account; and
- a developed surface that takes the relief (R) into account;

knowing that the developed surface is greater than at least 2% of the apparent surface, and preferably greater than a percentage between 3 and 6% with respect to the apparent surface.

5. Panel according to claim 3 or 4, wherein the difference between the upper level (L3) and the lower level (L1) is between 0.3 and 2 mm and is less than the spacing distance E between the respective tops of two adjacent bosses (5a).

6. Panel according to claim 2 alone or combined with one of claims 3 to 5, wherein each one of the series (S) of cavities (40) extends according to the same general direction, in such a way that the bosses (30) are distributed in a staggered manner and the cavities (40) are distributed in a staggered manner.

7. Panel according to claim 2 alone or combined with one of claims 3 to 6, wherein the two main faces (4a, 4b) are parallel and each one of the cavities (40) has a centre (40a) that corresponds to a local maximum of depth, with the first support surface (21,21') satisfying the following relation:

$$2 \le \lambda/h \le 15$$

where

h represents a maximum amplitude of the relief (R) measured perpendicularly to the two main faces (4a, 4b) and expressed in millimetres, and $\lambda$ represents a separation between two centres (40a) of adjacent cavities (40) separated by a boss, this separation, which preferably is constant, being expressed in millimetres, measured according to a direction which is perpendicular to the direction used to measure the amplitude h.

8. Panel as claimed in any preceding claim, wherein the first support surface (21,21') extends between two opposite ends (31, 32) of the panel (3), with the bosses (30) being distributed in such a way that the relief (R) extends between said two opposite ends of the panel.

9. Panel as claimed in any preceding claim, wherein the bosses (30) are distributed according to rows, according to a determined direction, with the first support surface (21, 21') having according to said determined direction a sinusoidal shape with an alternation of convex curved sections and of concave curved sections.

10. Panel according to any of claims 1 to 9, wherein the first support surface (21) is defined by at least one of the two main faces (4a, 4b) of the porous material (3a).

11. Panel according to any of claims 1 to 9, wherein the first support surface (21') is defined by an intermediate layer (26) distinct from the porous material and thinner than the porous material (3 a).

12. Panel as claimed in any preceding claim, wherein the first support surface (21, 21') has corrugations in two transverse directions in relation to one another.

13. Panel as claimed in any preceding claim, comprising a second support surface (23) provided with a relief, underlying to the second portion (7) of the barrier casing (2), with each one of the first and second support surfaces being devoid of planar surfaces, with the panel (3) having a parallelepiped format, preferably with a rectangular section.

14. Method of manufacturing a thermal insulation panel (3) of the VIP type as claimed in any preceding claim, using a plate of porous material (3a) resistant to compression and comprising the steps consisting substantially in:

- forming a first support surface (21,21') with a relief (R), via transcription of a relief with corrugations present on a plate or a roller, in such a way that the first support surface has bosses (30) outwards, each one with a rounded top, with the first support surface being chosen from a surface of a main face (4a, 4b) of the plate of porous material (3a), and a main surface of an intermediate layer (26) distinct from the porous material;
- during placing in a vacuum after the formation of the relief (R), encasing the plate of porous material (3a) and covering the first support surface (21, 21'), directly or indirectly, with a gas-tight barrier casing (2) making it possible to maintain an inside vacuum; and
- subjecting to atmospheric pressure the outside of the casing, this thanks to which a portion (5) of the barrier casing (2) extends along the first support surface (21, 21') and conforms according to a relief with corrugations (6) resulting from a contact with the relief (R) in order to form a main face (F1, F2) of the panel (3) provided with bosses (5a).

15. Thermally insulating wall element (70) for a building, **characterised in that** it comprises a plurality of panels (3) according to one of claims 1-13 glued or attached by means of a rigid framework (72) in at least one thermal insulation layer (69).

16. Enclosure (60) provided with means of cooling (61) or heating, intended to thermally insulate an interior volume (V), comprising a bottom wall (62), a lateral wall (63a, 63b, 63c) and an upper wall (64), **characterised in that** it comprises at least one panel (3) according to one of claims 1-13 forming a portion of a wall among the bottom wall (62), the lateral wall (63a, 63b, 63c) and the upper wall (64).

FIG. 1

FIG. 2A

## FIG. 2B

## FIG. 3A

## FIG. 3B

**FIG. 4**

10

5a

5

P

L3

L2

L1

8

8

8

9

**FIG. 5**

16

18

14  6

22  21

3a

17  19

18

15

e

13

21' 5 8 30 5a 28
26

3a 6 4a

# FIG. 6

60 3 64
3 V
63c 2
FR 3
59 3
61b
63b 3
3 63a
FIG. 7
62 3' 61a 61

FIG. 8

**EP 3 018 261 B1**

**Documents brevets cités dans la description**

- US 5858501 A
- US 5271980 A